# EUROPÄISCHE PATENTSCHRIFT

(11) **EP 1 180 410 B1**
(45) Veröffentlichungstag und Bekanntmachung des Hinweises auf die Patenterteilung: **26.01.2005**
(21) Anmeldenummer: 01119280.4
(22) Anmeldetag: 09.08.2001
(51) Int. Cl.: B23K 33/00, B23K 31/02, B21D 39/03, B60N 2/68, B21D 51/16, F16B 5/00, F16B 5/08

(54) **Schweissverbindung mit zwei Blechen und Verfahren zu ihrer Herstellung**
Welded joint of two thin sheets und process for its manufacturing
Assemblage soudé de deux tôles minces et méthode pour sa fabrication

(30) Priorität: 10.08.2000 DE 10039070
(43) Veröffentlichungstag der Anmeldung: 20.02.2002
(73) Patentinhaber: ATL Engineering GmbH, 42859 Remscheid (DE)
(72) Erfinder: Drew, Michael, 42583 Remscheid (DE)
(74) Vertreter: Draudt, Axel Hermann Christian, Dipl.-Ing.

(56) Entgegenhaltungen:
- CH-A- 329 133
- DE-C- 42 537
- FR-A- 977 920
- FR-A- 1 367 870
- GB-A- 2 246 289
- US-A- 2 185 236
- US-A- 3 205 050
- US-A- 5 249 841
- US-A- 5 524 406
- US-A- 5 581 953
- US-A- 5 878 940

## Beschreibung

Die Erfindung bezieht sich auf eine Schweißverbindung mit zwei Blechen, insbesondere mit zwei Blechen einer Sitzrücklehne, insbesondere eines Kraftfahrzeugs, mit einem ersten Blech, das eine abgewinkelte Blechkante hat, die an einer Randstruktur eines zweiten Blechs anliegt und dort verschweißt ist (siehe, zum Beispiel, GB-A-2 246 289).

Eine Schweißverbindung mit den vorgenannten Merkmalen ist bei einer Sitzrücklehne eines Kraftfahrzeugs bekannt. Die beiden Bleche umschließen in einem Teilbereich des Lehnenaufbaus einen Hohlraum und die abgewinkelte Blechkante ist von diesem Hohlraum weg nach außen abgewinkelt und dort in dem Anlagebereich verschweißt. Der Anlagebereich verbreitert die Sitzrücklehne in unerwünschter Weise. Diese Verbreiterung ist nicht unbeträchtlich, da die anzuwendenden Schweißwerkzeuge nicht zu unterschreitende Abmessungen haben. Infolgedessen ergeben sich Einflüsse entweder auf die Ausbildung der Randstruktur oder wenn deren Änderungen nicht akzeptabel sind, auf die Breite des mit den beiden Blechen gebildeten Bauteils. Beides ist unerwünscht.

Der Erfindung liegt daher die Aufgabe zugrunde, eine Schweißverbindung zweier hochbelasteter Bleche so zu gestalten, daß ihre Ausbildung und die Ausbildung der Randstruktur von der Ausbildung der Schweißverbindung unbeeinflußt sind und sich auch eine Verbesserung der Verbindungsfestigkeit ergibt.

Diese Aufgabe wird bei einer Schweißverbindung der eingangs genannten Art erfindungsgemäß dadurch gelöst, daß das zweite Blech mit einer vorbestimmten Anzahl von Durchsteckschlitzen versehen ist, und daß das erste Blech an seiner abgewinkelten Blechkante durch die Durchsteckschlitze hindurchgesteckte und unter die Randstruktur abgewinkelte Laschen hat, und daß die abgewinkelten Laschen mit der Randstruktur verschweißt und gemeinsam mit dieser dem ersten Blech praktisch antiparallel verformt sind.

Für die Erfindung ist von Bedeutung, daß für die beiden Bleche vor ihrem Verschweißen ein spezieller Zusammenbau vorhanden ist. Hierzu ist das erste Blech mit die abgewinkelte Blechkante bildenden Laschen ausgebildet, die durch Durchsteckschlitze des zweiten Blechs hindurchgesteckt sind. Die hindurchgesteckten Laschen sind abgewinkelt und mit dem zweiten Blech verschweißt, und zwar unter dessen Randstruktur mit letzterer. Die durchgeführte gemeinsame Verformung der Randstruktur und der Laschen führt zu einer Minimalisierung der Schweißverbindung in unerwünschter bzw. vorbestimmter Richtung, nämlich in der Ebene des zweiten Blechs bzw. in der Ebene einer Sitzrücklehne, falls die Blechstruktur zum Aufbau einer Sitzrücklehne eingesetzt ist. Die Sitzrücklehne kann dann praktisch ohne Rücksichtnahme auf Schweißstellen ausgebildet sein, beispielsweise so schmal wie möglich. Die Struktur bzw. die Rücksitzlehne, die von den beiden Blechen gebildet wird, kann hinsichtlich ihrer Außenabmessungen optimiert sein. Insbesondere kann die Sitzrücklehne eines Kraftfahrzeugs so breit wie möglich sein, um damit etwaigen Stabilitätsanforderungen zu genügen. Diese können ganz erheblich sein, abhängig z.B. von der geforderten Anlenkung der Sitzrücklehne am Sitz und/oder von der Anordnung von Befestigungsstellen eines Rückhaltegurts an der Sitzrücklehne. Die Verbesserung der Verbindungsfestigkeit beruht auf der formschlüssigen Verbindung der beiden Bleche im Durchsteckbereich.

Die Anwendung der Erfindung ist jedoch keineswegs auf Schweißverbindungen für Sitzrücklehnen eines Kraftfahrzeugs beschränkt. Sie kann vielmehr überall dort mit Vorteil angewendet werden, wo es auf die Ausbildung einer Randstruktur ankommt, die in ihrer Ausgestaltung von einer in ihrer Nähe durchzuführenden Schweißverbindung beeinträchtigt werden könnte und wo es auf eine Verbesserung der Verbindungsfestigkeit ankommt.

Die Schweißverbindung kann so ausgebildet sein, daß die Randstruktur eine ebene Blechkante ist. Die Randstruktur ist dann Bestandteil eines ebenen Blechs, dessen Außenrandbereich sie bildet. Damit werden optimale Voraussetzungen für die gemeinsame Verformung mit den Laschen des ersten Blechs geschaffen. Das ist massenfertigungsgerecht, weil dreidimensionale Randstrukturen nicht berücksichtigt werden müssen, die das Verformen erschweren würden.

Es ist vorteilhaft, die Schweißverbindung so auszubilden, daß die verformte Randstruktur an dem ersten Blech praktisch anliegt. Die Erstreckung quer zum ersten Blech wird damit minimiert. Außerdem wird die von den beiden Blechen gebildete Struktur im Kantenbereich der miteinander verbundenen Bleche optimal stabilisiert.

Es ist aber auch möglich, die Schweißverbindung so auszubilden, daß die Randstruktur mit Abstand vom ersten Blech antiparallel angeordnet ist. In diesem Fall kann die Randstruktur gemeinsam mit den Laschen Sonderaufgaben bei der Ausbildung der Struktur übernehmen, welche von den beiden Blechen gebildet wird. Im Falle eines Kraftfahrzeugsitzes kann eine Haltekante ausgebildet werden, die beispielsweise Bestandteil einer Spannvorrichtung ist, um die Sitzrücklehne eines Kraftfahrzeugs bespannen zu können, oder die zur Befestigung eines Beschlagteils herangezogen werden kann, um Rücklehnenbeschläge an der Rücklehne zu befestigen.

Die Schweißverbindung kann dahingehend ausgebildet werden, daß das erste Blech in einem Winkel zum zweiten Blech angeordnet ist. Alle Winkelanordnungen der Bleche zueinander bleiben von der Verschweißung unbeeinträchtigt, da diese auf der dem im Winkel angeordneten ersten Blech abgewendeten Seite erfolgt. Das steigert die Freizügigkeit der relativen Anordnung der Bleche zueinander.

Besonders vorteilhaft ist es, die Schweißverbindung so auszubilden, daß das zweite Blech mit dem ersten Blech eine im Querschnitt geschlossene hohle Struktur bildet. In diesem Fall liegt die Verschweißung im Zuge der Kontur der geschlossenen hohlen Struktur. Die Freizügigkeit der Ausbildung geschlossener hohler Strukturen wird dadurch verbessert.

Des weiteren ist es zu bevorzugen, daß die beiden Bleche in Kantenbereichen der von ihnen gebildeten hohlen Struktur verschweißt sind. Hier kann die Abwinkelung der Blechkante des ersten Blechs zu Stabilisierungszwecken des Kantenbereichs herangezogen werden. Das verbessert die Belastbarkeit der von den Blechen gebildeten Struktur.

Eine bedeutsame Ausgestaltung der Schweißverbindung ist dadurch gekennzeichnet, daß das zweite Blech im Bereich seiner Durchsteckschlitze zum ersten Blech hin abgekröpft ist und die abgewinkelten Laschen des ersten Blechs in Abkröpfungen des zweiten Blechs mit diesem bündig angeordnet sind. Es ergibt sich eine außenbündige Ausbildung der Schweißverbindung, bei der die Laschen also nicht als außen störende Erhebungen vorhanden sind, auf die ggf. Rücksicht genommen werden müßte. Ein weiterer Vorteil der Abkröpfung ist es, daß der Durchsteckschlitz aus der Ebene des zweiten Blechs verlagert wird, wobei die Abkröpfung das erste Blech auf einem Abstand zu dem zweiten Blech hält, der durch das Ausmaß der Abkröpfung bestimmt ist. Infolgedessen liegen die Kanten des ersten Blechs nicht am zweiten Blech an und es kann bei dynamischen Belastungen der Schweißverbindung nicht dazu kommen, daß beide Bleche aneinander reiben, was beispielsweise mit störenden Quietschgeräuschen verbunden sein könnte. Letztere wären insbesondere bei Sitzrücklehnen von Kraftfahrzeugen infolge der dort auftretenden Biege- und Torsionsbelastungen zu befürchten.

Ähnlich zur vorbeschriebenen Ausführungsform ist es auch möglich, daß das erste Blech im Bereich von Kanten und/oder Laschen zum zweiten Blech hin abgekröpft ist und die Kanten und/oder Laschen in Abkröpfungen des ersten Blechs mit diesem bündig angeordnet sind. Damit wird vor allem erreicht, daß die Kanten und/oder Laschen nicht über das erste Blech vorstehen und dadurch unerwünschte Störstellen bilden.

Die Erfindung bezieht sich auch auf ein Verfahren zum Verbinden zweier hochbelastbarer Bleche, insbesondere mit zwei Blechen einer Sitzrücklehne, insbesondere eines Kraftfahrzeugs, bei dem ein erstes Blech mit einer abgewinkelten Blechkante an ein zweites Blech angelegt und dort verschweißt wird.

Im Sinne der oben genannten Aufgabe kann das vorgenannte Verfahren dahingehend verbessert werden, daß als zweites Blech ein solches mit einer vorbestimmten Anzahl von Durchsteckschlitzen verwendet wird, und daß als erstes Blech eines mit vorstehenden Laschen verwendet wird, die durch die Durchsteckschlitze hindurchgesteckt werden, wonach ein Abwinkeln der Blechkante im Bereich der Laschen erfolgt, die danach an einer dem ersten Blech abgewendeten Randstruktur des zweiten Blechs verschweißt und gemeinsam mit dieser dem ersten Blech praktisch antiparallel verformt werden. Es kann angenommen werden, daß die Herstellung der Blechlaschen als Kante des ersten Blechs unproblematisch ist, da sie in demselben Arbeitsgang mit dem Herstellen des Außenumrisses des ersten Blechs erzeugt werden, z.B. durch Stanzen. Dementsprechend sind auch die Durchsteckschlitze des zweiten Blechs in einfacher Weise beim Herstellen des Außenumfangs des zweiten Blechs z.B. durch Stanzen und/oder durch Verformen des zweiten Blechs mit Abkröpfungen und/oder mit Randstrukturen in einem einzigen Arbeitsgang herzustellen. Das Verfahren ist insbesondere insoweit vorteilhaft, als beim Verschweißen von Blechrändern herkömmliche Schweißverfahren eingesetzt werden können, beispielsweise das Punktschweißen, z.B. mit herkömmlichen Schweißrobotern. Die mit den Laschen verschweißte Randstruktur wird so verformt, daß sie die Erstreckung der Struktur beispielsweise in Richtung des zweiten Blechs praktisch nicht vergrößert, jedenfalls auf ein Minimum beschränkt, so daß die Struktur in der betreffenden Breite oder Höhe so groß wie möglich ausgebildet werden kann.

Das Verformen der Laschen mit der Randstruktur kann in unterschiedlicher Weise ausgeführt werden. Es ist vorteilhaft, das Verfahren so durchzuführen, daß das Verformen der Laschen mit der Randstruktur mittels einer Bördeleinrichtung erfolgt. Als Bördeleinrichtung kann eine herkömmliche Einrichtung angewendet werden, beispielsweise eine Rolleinrichtung.

Das Verfahren kann aber auch so durchgeführt werden, daß das erste Blech von einer Matrize umfaßt wird, die einen Trim-Kanal hat, in dem eine praktisch antiparallele Verformung der Laschen mit der Randstruktur mittels einer Patrize erfolgt. Mit Hilfe der in dem Trim-Kanal eindringenden Patrize erfolgt eine Verformung, bei der das erste Blech von der Matrize ebenso gegen Verformungen abgestützt ist, wie die zu verformenden Teile. Der Verformungseinfluß auf beide im Sinne eines unerwünschten Verzugs wird dabei so gering wie möglich gehalten.

Die Erfindung wird anhand von in der Zeichnung dargestellten Ausführungsbeispielen erläutert. Es zeigt:
- Fig.1: einen Querschnitt durch zwei zusammengesteckte Bleche als Darstellung eines ersten Verfahrensschritts,
- Fig.2: einen weiteren, auf die Bleche der Fig.1 angewendeten Verfahrensschritt des Schweißens nach einer vorhergegangenen Verformung des ersten Blechs,
- Fig.3: eine weitere Verformung der Struktur der Fig.2 zu einer endgültigen Struktur, die als Holm einer Sitzrücklehne eines Kraftfahrzeugs angesehen werden kann,
- Fig.4-6: den Fig.1 bis Fig.3 ähnliche Verfahrensschritte an einer etwas anderen Struktur unter Anwendung abweichender Verformungsmittel im dritten Verfahrensschritt,
- Fig.7: eine perspektivische Darstellung einer Kantenstruktur zweier Bleche,
- Fig.8: eine der Fig.7 entsprechende perspektivische Darstellung zweier Bleche mit abweichender Kantenausbildung,
- Fig.9: den Schnitt IX-IX durch Fig.1 mit zusätzlich dargestellter Kröpfung des zweiten Blechs,
- Fig.10a,11a: einander ähnliche perspektivische Teilansichten einer Kantenstruktur zweier Bleche, und
- Fig.10b, 11b: Schnitte A-A und B-B durch die Darstellungen der Fig.10a,11b.

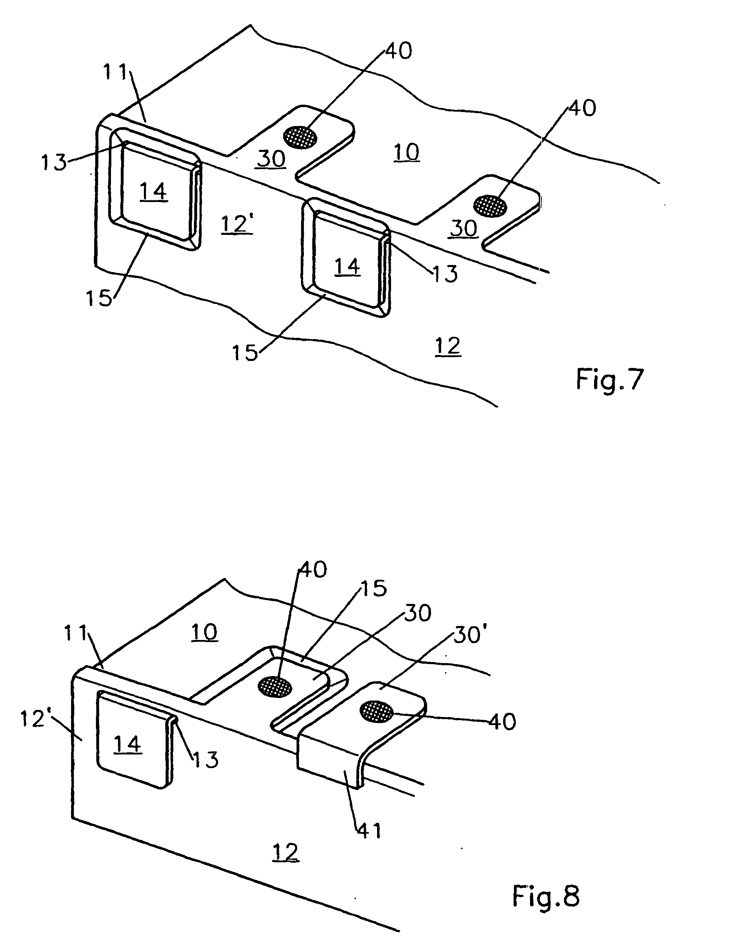

Die Figuren 7-9, 10a-b und 11a-b stellen Beispiele dar, die nicht unter dem Gegenstand der Ansprüche fallen.

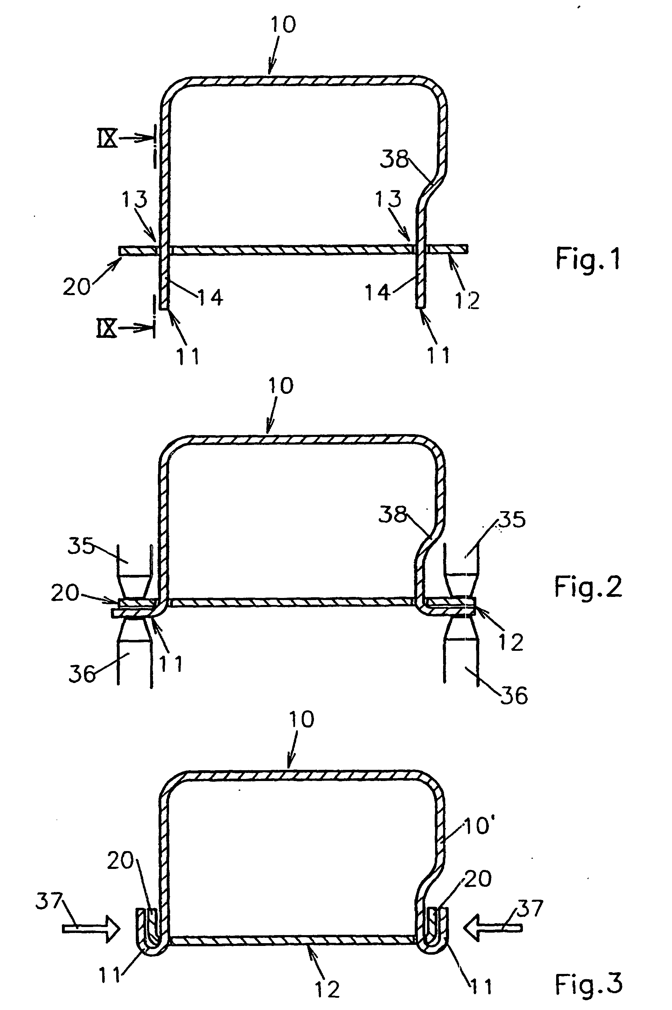

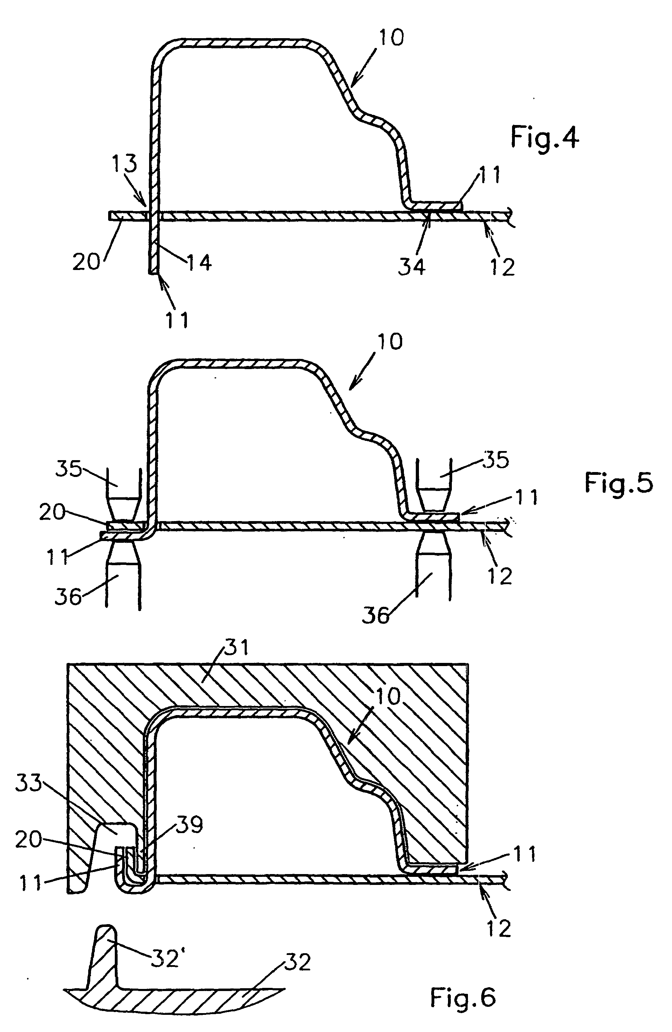

Die Fig.3,6 zeigen Querschnitte fertiggestellter Hohlstrukturen. Im Fall der Fig.3 ist ein sich senkrecht zur Darstellungsebene erstreckender Träger dargestellt, der aus zwei Blechen 10,11 entsprechend der Figurenfolge 1 bis 3 hergestellt wurde. Die Hohlstruktur der Fig.6 zeigt einen horizontalen Teilquerschnitt durch eine Rückenlehne eines Kraftfahrzeugsitzes. Der vollständige horizontale Querschnitt ist so zu denken, daß die in Fig.6 dargestellte Struktur um eine in der Darstellungsebene senkrechte Symmetrieachse gespiegelt und mit Abstand angeordnet ist. Die Sitzrücklehne kann beispielsweise aus der Hohlstruktur der Fig.6 bestehen, die im gesamten Außenumfangsbereich einer rechteckförmigen Sitzrücklehne vorhanden ist, so daß ein vertikaler Schnitt zu der Fig.6 ähnlichen Querschnittdarstellungen führt.

Die in den Fig.1 bis 6 dargestellten Bleche 10,12 sind so vorformatiert, daß aus ihnen durch geeignete Verformungen das endgültige Produkt hergestellt werden kann. Dementsprechend sind die Bleche 10 im wesentlichen U-förmig, V-artig od. dergl. ausgebildet, während die Bleche 12 als im wesentlichen ebene Teile dargestellt sind.

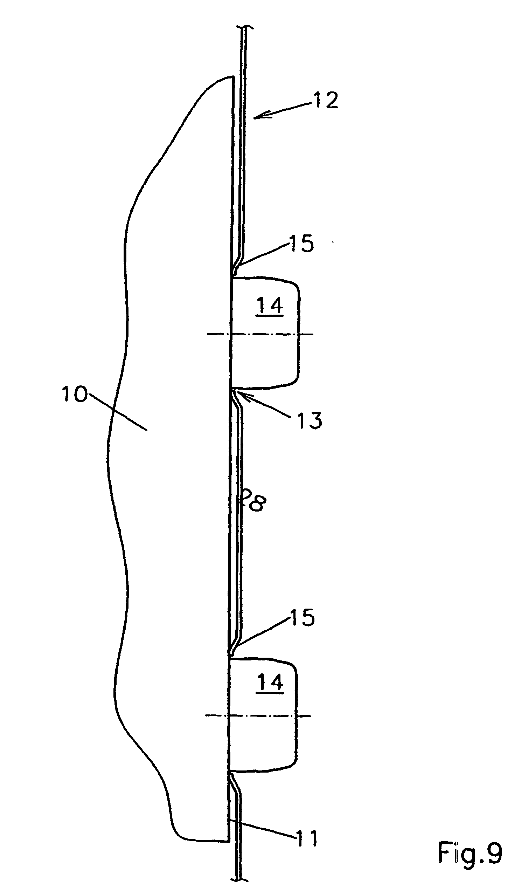

Die Bleche 12 sind mit zumindest einer Reihe von Durchsteckschlitzen 13 versehen, die senkrecht zur Darstellungsebene der Fig.1 bis 6 angeordnet sind. Die Durchsteckschlitze 13 dienen der Aufnahme von Laschen 14, mit denen die Blechkante 11 des Blechs 10 ausgebildet ist. Fig.9 zeigt einen Teil eines Blechs 10 mit zwei solcher Laschen 14, die im Abstand voneinander angeordnet sind. Die Schlitze 13 sind nur wenig breiter, als es der Dicke des Blechs 10 entspricht.

In einem ersten Verfahrensschritt werden ein Blech 10 und ein Blech 12 lediglich zusammengesteckt. Dabei sitzen die Kanten des Blechs 10 auf dem Blech 12 auf. Gemäß Fig.1 sind zwei Kanten 11 vorhanden, während die Hohlstrukturen nach Fig.4 nur eine Kante 11 mit Laschen 14 aufweist, während die andere Kante 11 abgewinkelt ist und mit einer Seitenfläche 34 an dem Blech 12 anliegt.

Mit den Durchsteckschlitzen 13 des Blechs 12 wird eine Randstruktur 20 dieses Blechs definiert. Die Randstruktur 20 kann auch anders geformt werden, als dargestellt, wenn dies aus konstruktiven Gründen erforderlich ist. Jedenfalls soll sie der Befestigung mit der Kante 11 des Blechs 10 dienen. Zu diesem Zweck wird die Kante 11 bzw. werden die Laschen 14 der Kante 11 um 90 Grad umgebogen, so daß die Laschen 14 parallel zu der ebenen Randstruktur 20 angeordnet sind. Das erfolgt auf beiden Seiten gemäß Fig.2 bzw. auf nur einer Seite gemäß Fig.5. Die unter die Randstruktur 20 abgewinkelten Laschen 14 werden dann mit der Randstruktur 20 verschweißt. Hierzu sind in den Fig.2 und 5 Schweißelektroden 35 und Schweißgegenelektroden 36 dargestellt. Jeweils eine Schweißelektrode 35 und eine Schweißgegenelektrode 36 werden zusammengepreßt und Verschweißen eine Lasche 14 mit der Randstruktur 20 z.B. punktweise. Ähnliches gilt auch für die in Fig.5 rechte Darstellung, bei der die Kante 11 flach auf dem Blech 12 aufliegt und mit diesem verpunktet werden kann.

Die in den Fig. 2 und 5 dargestellten Hohlstrukturen sind bereits in sich stabil. Sie haben aber noch nicht ihre endgültige Form, die auf eine optimale Breite bzw. auf eine optimale Stabilität bei vorgegebener maximaler Breite abzielt. Dementsprechend wird die Randstruktur nach ihrem Verschweißen gemeinsam mit der Kante 11 bzw. mit deren Laschen 14 antiparallel verformt.

Fig.3 zeigt prinzipiell die Anwendung einer Verformungseinrichtung durch dargestellte Pfeile 37. Die Pfeile symbolisieren eine Verformungskraft einer nicht dargestellten, aber an sich bekannten Bördeleinrichtung. Die Blechkante 11 und die Randstruktur 20 liegen nach dem Umformen außen als Paket auf dem Blech 10 auf und erstrecken sich infolgedessen in Richtung der Pfeile 37 nur so weit wie nötig, nämlich den addierten Blechdicken entsprechend.

In Fig.3 ist rechts dargestellt, daß die umgebogene Randstruktur 20 mit den abgewinkelten Laschen 14 der Blechkante 11 in einem Rücksprung 38 des Blechs 10 angeordnet ist, der bereits mit der U-förmigen Ausgestaltung des Blechs 10 zugleich hergestellt wurde. Der Rücksprung 38 ist eine senkrecht zur Darstellungsebene durchlaufende Rinne oder Vertiefung, die so ausgebildet ist, daß die außenliegende Fläche der umgebogenen Randstruktur 20 mit der benachbarten Außenfläche 10' des verformten Blechs 10 bündig liegt.

Fig.6 läßt die Herstellung der antiparallel zur benachbarten Wand des Blechs 10 erfolgende Verformung mittels eines Trim-Kanals 33 erkennen. Der Trim-Kanal 33 ist in eine Matrize 31 eingebracht, die das gesamte V-artig vorgeformte erste Blech 10 außen umgibt und zugleich auch der in Fig.4 dargestellten Forngebung dieses Blechs 10 gedient haben kann. Der Trim-Kanal 33 ist nun so angeordnet, daß die Matrize 31 einen Trim-Vorsprung 39 ausbildet, der außen am Blech 10 anliegt und eine vorbestimmte Dicke hat. Mit der Matrize 31 wirkt eine Patrize 32 zusammen, die einen Veformungsvorsprung 32' hat. Mit Hilfe dieses Verformungsvorsprungs 32' kann die Randstruktur 20 mit den mit ihnen verbundenen Laschen 14 der Kante 11 aus der in Fig.5 dargestellten Stellung in die in Fig.6 dargestellte Stellung gedrückt werden. Auch in diesem Falle erfolgt die Verformung so, daß die Randstruktur 20 und die Kante 11 dem benachbarten Blechbereich des Blechs 10 praktisch antiparallel zugeordnet sind. Allerdings ist hier ein durch die Dicke des Trim-Vorsprungs 39 bedingter Abstand vorhanden. Dieser Abstand kann Funktionen an Bauteilen übernehmen, für die die dargestellte Hohlstruktur der Fig.6 eingesetzt wird. Die Randstruktur 20 kann beispielsweise als Befestigungsmittel eingesetzt werden.

Die Figuren 7-9, 10a-b und 11a-b stellen Beispiele dar, die nicht unter dem Gegenstand der Ansprüchen fallen.

Die Fig.7,8 zeigen aus Blechen 10,12 gebildete Teilstrukturen. Die Bleche 10,12 sind etwa im rechten Winkel zueinander angeordnet, so daß entsprechende Kantenstrukturen entstehen. In den Blechen 12 der Fig.7,8 sind, wie auch in den Blechen 12 der Fig.1 bis 6, Durchsteckschlitze 13 in beschriebener Weise vorhanden. Durch diese Durchsteckschlitze 13 sind Laschen 14 einer Kante 11 des Blechs 10 gesteckt und abgewinkelt. Fig.9 zeigt die Ausbildung der Blechkante 11 des ersten Blechs 10 über einen Teil ihrer Länge. Die Blechlaschen 14 sind in dieser Darstellung nicht abgewinkelt. Sie erstrecken sich in der Ebene des Blechs 10 und sind durch Durchsteckschlitze 13 hindurchgesteckt, die sich in Abkröpfungen 15 des zweiten Blechs 12 befinden. Werden die Laschen 14 gemäß Fig.7 so abgewinkelt, daß sie in den Abkröpfungen 15 Platz finden, so liegen sie mit ihren Außenflächen bündig mit den benachbarten Außenflächen des Blechs 12.

In Fig.8 ist für die einzige dort dargestellte abgewinkelte Lasche 14 keine Abkröpfung 15 vorhanden, so daß diese Lasche 14 außen auf der Fläche des Blechs 12 vorspringend aufliegt.

Fig.7 zeigt Laschen 30 des Blechs 12 die ebenfalls abgewinkelt sind und auf der Außenfläche des Blechs 10 aufliegen. Sie liegen nicht in Abkröpfungen ein und springen daher senkrecht zum Blech 10 vor. Die dargestellten Schweißpunkte 40 kennzeichnen ihre feste Verbindung mit dem Blech 10. Die Anordnung der Laschen 30 ist so getroffen, daß sie sich in der Richtung der Durchsteckschlitze 13 mit den Laschen 14 abwechseln. Das ist im Sinne einer Symmetrierung der dargestellten Kantenausbildung vorteilhaft. Es ergibt sich eine gleichmäßige Beanspruchungsverteilung über die Länge der Kante.

In Fig.8 ist dargestellt, daß Laschen 30 auch in Abkröpfungen 15 untergebracht sein können und somit bündig mit dem Blech 10 liegen.

Fig.8 zeigt eine weitere Ausbildung einer Lasche 30', die mit dem Blech 10 verschweißt ist, z.B. mit einem Schweißpunkt 40. Die Lasche 30' ist aber nicht einstückiger Bestandteil des Blechs 12, sondern übergreift dieses formschlüssig. Hierzu hat die Lasche 30' eine Haltekante 41, die als Abwinkelung der Lasche 30' ausgebildet ist und die Platte 12' ebenfalls am Blech 10 hält. Solche Laschen 30' sind insbesondere zur nachträglichen oder ergänzenden Versteifung der Verbindung von Vorteil, vor allem für in der Ebene des Blechs 10 erfolgende Belastungen.

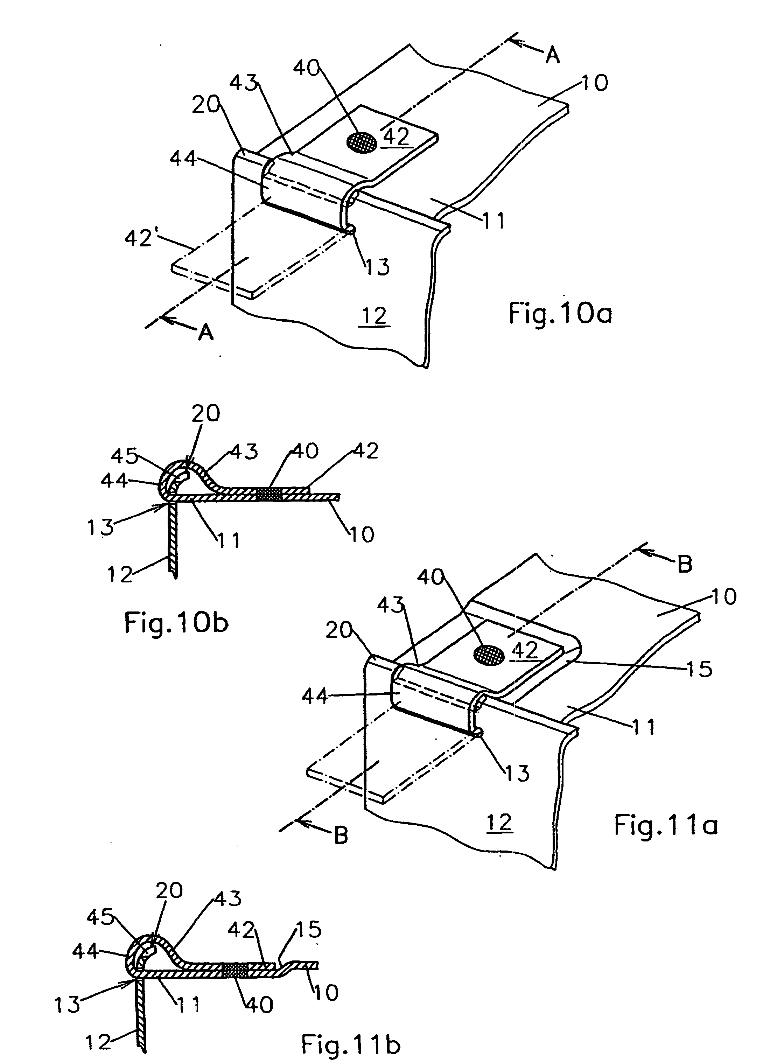

Die Ausführungsformen der Fig.10a,11a betreffen Schweißverbindungen mit zwei Blechen 10,12, von denen das Blech 12 in vorbeschriebener Weise mit Durchsteckschlitzen 13 versehen ist. Mehrere Laschen 42, von denen jeweils nur eine einzige dargestellt ist, springen von einer Kante 11 des ersten Blechs 10 vor und sind durch die Durchsteckschlitze 13 hindurchgesteckt und darüber hinaus so zum ersten Blech 10 anti-parallel zurückgebogen, daß sie die Randstruktur 20 umfassen, die vom zweiten Blech 12 zwischen dem Durchsteckschlitz 13 und dessen Kante gebildet ist. Die Randstruktur ist vor allem durch den Abstand des Durchsteckschlitzes 13 zur Blechkante bestimmt. Die Lasche 42 wird mit dem ersten Blech 10 verschweißt. Die Schweißstelle ist mit 40 bezeichnet. Es findet ein Punktschweißen statt. Zieht man in Betracht, daß mehrere gleichartig ausgebildete Laschen 42 vorhanden sind, so ergibt sich, daß nur einzige Reihe von Schweißpunkten 40 erforderlich ist, um die in den Fig.10a,11a dagestellte Eckverbindung der beiden Bleche 10,12 mit mehreren Laschen 42 herzustellen.

Damit eine hochbelastbare Schweißstelle 40 in herkömmlicher Schweißtechnik hergestellt werden kann, ist die Lasche 42 im Bereich der Schweißstelle parallel zum ersten Blech 10 abgekröpft. Die Abkröpfung wird so gestaltet, daß eine Überbelastung des Werkstoffs bzw. der Lasche 42 beim Biegen der Lasche aus der in Fig.10a dargestellten Stellung 42' vermieden wird. Zugleich nimmt die Formgebung im Bereich der Abkröpfung 43 und in einem Umbiegebereich 44 darauf Rücksicht, wie die Ausgestaltung der Bleche 10,12 im übrigen ist.

Die Fig. 10a bis 11b lassen erkennen, daß der Abstand der Durchsteckschlitze 13 von der Randstruktur bzw. von der parallelen Kante des Blechs 12 unterschiedlich ist. Das liegt daran, daß das Blech 10 im Bereich der Anlage der Lasche 42 mit einer Abkröpfung 15 versehen ist, wie sie zu Fig.8 bezüglich der dort dargestellten Lasche 30 beschrieben wurde. Dementsprechend muß auch die Abkröpfung 43 gemäß den Fig. 11a, 11b größer sein, als die Abkröpfung 43 der Fig.10a, 10b. Der Umbiegebereich 44 läßt sich allerdings schmaler halten, wenn die Randstruktur 20 im Bereich der herumgebogenen Laschen 42 ausgespart sind. In den Fig.10b, 11b sind solche Aussparungen 45 dargestellt. Die Lasche 42 kann dann in den Bereich der Aussparung 45 hinein verformt werden bzw. die Lasche 42 kann von vornherein kürzer gehalten werden, da der Bereich 44 schmaler ist. Zu den Fig.10b, 11b versteht sich, daß die Laschen 42 bei mit Aussparungen 45 versehenen Blechen 12 in diese Aussparungen 45 eingreifen können, wie das aus den Fig.10a, 11a zu ersehen ist.

Die in den Fig.10a bis 11b dargestellten Schweißverbindungen, die nicht unter dem Gegenstand der Ansprüche fallen, sind so ausgebildet, daß das zweite Blech 12 in seinem die Durchsteckschlitze 13 aufweisenden Randbereich lediglich formschlüssig umfaßt sind. Eine Verschweißung beider Bleche 10,12 aneinander findet nicht statt. Es ist daher zweckmäßig, daß die Schweißverbindung mit anders ausgebildeten Schweißverbindungen kombiniert wird. Beispielsweise ist es vorstellbar, daß sich die Schweißverbindungen der Fig.10a bis 11b mit Schweißverbindungen der Fig.3 abwechseln. Es ist aber auch denkbar, daß bei der Herstellung einer Hohlstruktur in einem Verbindungsbereich zweier Bleche 10,12 lediglich die in den Fig.11a bis 11b dargestellte Schweißverbindung angewendet wird, während in einem zweiten Schweißbereich beispielsweise gemäß Fig.5 rechts verschweißt wird, wo eine abgewinkelte Randstruktur, nämlich eine durchlaufende Blechkante 11 flach auf dem zweiten Blech 12 aufliegend in herkömmlicher Weise verschweißt wird.

## Patentansprüche

1. Schweißverbindung mit zwei Blechen, insbesondere mit zwei Blechen einer Sitzrücklehne, insbesondere eines Kraftfahrzeugs, mit dem ersten Blech (10), das eine abgewinkelte Blechkante (11) hat, die an einer Randstruktur (20) des zweiten Blechs (12) anliegt und dort verschweißt ist, **dadurch gekennzeichnet, daß** das zweite Blech (12) mit einer vorbestimmten Anzahl von Durchsteckschlitzen (13) versehen ist, daß das erste Blech (10) an seiner abgewinkelten Blechkante (11) durch die Durchsteckschlitze (13) hindurchgesteckte und unter die Randstruktur (20) abgewinkelte Laschen (14) hat, und daß die abgewinkelten Laschen (14) mit der Randstruktur (20) verschweißt und gemeinsam mit dieser dem ersten Blech (10) praktisch antiparallel verformt sind.

2. Schweißverbindung nach Anspruch 1, **dadurch gekennzeichnet, daß** die Randstruktur (20) eine ebene Blechkante ist.

3. Schweißverbindung nach Anspruch 1 oder 2, **dadurch gekennzeichnet, daß** die verformte Randstruktur (20) an dem ersten Blech (10) praktisch anliegt.

4. Schweißverbindung nach Anspruch 1 oder 2, **dadurch gekennzeichnet, daß** die Randstruktur (20) mit Abstand vom ersten Blech (10) antiparallel angeordnet ist.

5. Schweißverbindung nach einem der Ansprüche 1 bis 4, **dadurch gekennzeichnet, daß** das erste Blech (10) in einem Winkel zum zweiten Blech (12) angeordnet ist.

6. Schweißverbindung nach einem der Ansprüche 1, bis 5, **dadurch gekennzeichnet, daß** das zweite Blech (12) mit dem ersten Blech (10) eine im Querschnitt geschlossene hohle Struktur bildet.

7. Schweißverbindung nach einem der Ansprüche 1 bis 6, **dadurch gekennzeichnet, daß** die beiden Bleche (10,12) in Kantenbereichen der von ihnen gebildeten hohlen Struktur verschweißt sind.

8. Schweißverbindung nach einem der Ansprüche 1 bis 7, **dadurch gekennzeichnet, daß** das zweite Blech (12) im Bereich seiner Durchsteckschlitze (13) zum ersten Blech (10) hin abgekröpft ist und die abgewinkelten Laschen (14) des ersten Blechs (10) in Abkröpfungen (15) des zweiten Blechs (12) mit diesem bündig angeordnet sind.

9. Schweißverbindung nach einem der Ansprüche 1 bis 8, **dadurch gekennzeichnet, daß** das erste Blech (10) im Bereich von Kanten und/oder Laschen (30) zum zweiten Blech (12) hin abgekröpft ist und die Kanten und/oder Laschen (30) in Abkröpfungen (15) des ersten Blechs (10) mit diesem bündig angeordnet sind.

10. Verfahren zum Verbinden zweier hochbelastbarer Bleche, insbesondere zweier Bleche einer Sitzrücklehne insbesondere eines Kraftfahrzeugs, bei dem das erste Blech (10) mit einer abgewinkelten Blechkante (11) an das zweite Blech (12) angelegt und dort verschweißt wird, **dadurch gekennzeichnet, daß** als zweites Blech (12) ein solches mit einer vorbestimmten Anzahl von Durchsteckschlitzen (13) verwendet wird, und daß als erstes Blech (10) eines mit vorstehenden Laschen (14) verwendet wird, die durch die Durchsteckschlitze (13) hindurchgesteckt werden, wonach ein Abwinkeln der Blechkante (11) im Bereich der Laschen (14) erfolgt, die danach an einer dem ersten Blech (10) abgewendeten Randstruktur (20) des zweiten Blechs (12) verschweißt und gemeinsam mit dieser dem ersten Blech (10) praktisch antiparallel verformt werden.

11. Verfahren nach Anspruch 10, **dadurch gekennzeichnet, daß** das Verformen der Laschen (14) mit der Randstruktur (20) mittels einer Bördeleinrichtung erfolgt.

12. Verfahren nach Anspruch 10 oder 11, **dadurch gekennzeichnet, daß** das erste Blech (10) von einer Matrize (31) umfaßt wird, die einen Trim-Kanal (33) hat, in dem eine praktisch antiparallele Verformung der Laschen (14) mit der Randstruktur (20) mittels einer Patrize (32) erfolgt.

## Claims

1. Weld connection having two metal plates, in particular having two metal plates of a back of a seat, in particular of a motor vehicle, with the first metal plate (10), which has a bent plate edge (11) which lies against a border structure (20) of the second metal plate (12) and is welded at this site, **characterised in that** the second metal plate (12) is provided with a predetermined number of through-going slits (13), that the first metal plate (10) has brackets (14) which are inserted at its bent plate edge (11) through the through-going slits (13) and has brackets (14) which are bent under the border structure (20), and that the bent brackets (14) are welded to the border structure (20) and are shaped together with this structure in a practically anti-parallel manner to the first metal plate (10).

2. Weld connection as claimed in claim 1, **characterised in that** the border structure (20) is a planar metal edge.

3. Weld connection as claimed in claim 1 or 2, **characterised in that** the shaped border structure (20) lies practically against the first metal plate (10).

4. Weld connection as claimed in claim 1 or 2, **characterised in that** the border structure (20) is disposed at a spaced disposition in an anti-parallel manner with respect to the first metal plate (10).

5. Weld connection as claimed in any one of claims 1 to 4, **characterised in that** the first metal plate (10) is disposed at an angle with respect to the second metal plate (12).

6. Weld connection as claimed in any one of claims 1 to 5, **characterised in that** the second metal plate (12) forms with the first metal plate (10) a hollow structure which has a closed cross-section.

7. Weld connection as claimed in any one of claims 1 to 6, **characterised in that** the two metal plates (10, 12) are welded in the edge regions of the hollow structure formed by thereby.

8. Weld connection as claimed in any one of claims 1 to 7, **characterised in that** the second metal plate (12) is bent at right angles in the region of its through-going slits (13) towards the first metal plate (10) and the bent brackets (14) of the first metal plate (10) are disposed in the bends (15) of the second metal plate (12) and flush therewith.

9. Weld connection as claimed in any one of claims 1 to 8, **characterised in that** the first metal plate (10) is bent at right angles in the region of the edges and/or brackets (3) towards the second metal plate (12) and the edges and/or brackets (30) are disposed in the bends (15) of the first metal plate (10) and flush therewith.

10. Method for connecting two metal plates which are capable of bearing heavy loads, in particular two metal plates of a back of a seat, in particular of a motor vehicle, wherein the first metal plate (10) is placed against the second metal plate (12) with a bent metal plate edge (11) and is welded at this site, **characterised in that** as the second metal plate (12) such a metal plate which has a predetermined number of through-going slits (13) is used and that as a first metal plate (10) a plate which has protruding brackets (14) is used, which protruding brackets are inserted through the through-going slits (13), after which the plate edge (11) is bent in the region of the brackets (14) which are then welded to a border structure (20) of the second metal plate (12) facing away from the first metal plate and are shaped together with this structure in a practically anti-parallel manner to the first metal plate (10).

11. Method as claimed in claim 10, **characterised in that** the brackets (14) are shaped with the border structure (20) by means of a flanging means.

12. Method as claimed in claim 10 or 11, **characterised in that** the first metal plate (10) is encompassed by a female mould (31) which has a trim channel (33) and in which the brackets (14) are shaped in a practicallly anti-parallel manner with the border structure (20) by means of a male mould (32).

## Revendications

1. Assemblage soudé comprenant deux tôles, en particulier deux tôles d'un dossier de siège, en particulier d'un véhicule automobile, la première tôle (10) présentant un bord coudé (11) qui est appliqué contre une structure de bord (20) de la seconde tôle (12) et est soudé à cet endroit, **caractérisé en ce que** la seconde tôle (12) est pourvue d'un nombre prédéfini de fentes de passage (13), **en ce que** la première tôle (10) a sur son bord coudé (11) des pattes (14) qui traversent les fentes de passage (13) et qui sont repliées sous la structure de bord (20), et **en ce que** les pattes repliées (14) sont soudées avec la structure de bord (20) et sont déformées conjointement avec celle-ci pour être pratiquement antiparallèles à la première tôle (10).

2. Assemblage soudé selon la revendication 1, **caractérisé en ce que** la structure de bord (20) est constituée par un bord de tôle plan.

3. Assemblage soudé selon la revendication 1 ou 2, **caractérisé en ce que** la structure de bord (20) déformée est pratiquement appliquée contre la première tôle (10).

4. Assemblage soudé selon la revendication 1 ou 2, **caractérisé en ce que** la structure de bord (20) est espacée de la première tôle (10) et antiparallèle à celle-ci.

5. Assemblage soudé selon l'une des revendications 1 à 4, **caractérisé en ce que** la première tôle (10) est disposée suivant un certain angle par rapport à la seconde tôle (12).

6. Assemblage soudé selon l'une des revendications 1 à 5, **caractérisé en ce que** la seconde tôle (12) forme avec la première tôle (10) une structure creuse à section transversale fermée.

7. Assemblage soudé selon l'une des revendications 1 à 6, **caractérisé en ce que** les deux tôles (10, 12) sont soudées dans la zone des bords de la structure creuse qu'elles définissent.

8. Assemblage soudé selon l'une des revendications 1 à 7, **caractérisé en ce que** la seconde tôle (12), dans la zone de ses fentes de passage (13), est recourbée vers la première tôle (10) et les pattes coudées (14) de la première tôle (10) sont disposées dans les parties recourbées (15) de la seconde tôle (12), dans l'alignement de celle-ci.

9. Assemblage soudé selon l'une des revendications 1 à 8, **caractérisé en ce que** la première tôle (10), dans la zone des bords et/ou de pattes (30), est recourbée vers la seconde tôle (12) et les bords et/ou pattes (30) sont disposés dans les parties recourbées (15) de la première tôle (10), dans l'alignement de celle-ci.

10. Procédé pour assembler deux tôles robustes, en particulier deux tôles d'un dossier de siège, en particulier d'un véhicule automobile, selon lequel la première tôle (10) est appliquée avec un bord coudé (11) contre la seconde tôle (12) et est soudée à cet endroit, **caractérisé en ce qu'**on utilise comme seconde tôle (12) une tôle avec un nombre prédéfini de fentes de passage (13) et **en ce qu'**on utilise comme première tôle (10) une tôle avec des pattes saillantes (14) qui sont introduites dans les fentes de passage (13), après quoi le bord (11) est coudé dans la zone des pattes (14), lesquelles sont ensuite soudées sur une structure de bord (20) de la seconde tôle (12) opposée à la première tôle (10), et sont déformées conjointement avec ladite structure (20) pour être pratiquement antiparallèles à la première tôle (10).

11. Procédé selon la revendication 10, **caractérisé en ce que** la déformation des pattes (14) avec la structure de bord (20) se fait à l'aide d'un dispositif de repliage.

12. Procédé selon la revendication 10 ou 11, **caractérisé en ce que** la première tôle (10) est entourée par une matrice (31) qui comporte un conduit d'équilibrage (33) dans lequel a lieu une déformation pratiquement antiparallèle des pattes (14) avec la structure de bord (20), à l'aide d'un poinçon (32).
